# EUROPEAN PATENT SPECIFICATION

(11) **EP 3 218 598 B1**
(45) Date of publication and mention of the grant of the patent: **03.11.2021**
(21) Application number: 15797378.5
(22) Date of filing: 11.11.2015
(51) Int. Cl.: B64D 47/02, F03D 5/00, B64C 31/06

(54) **A KITE**
WINDDRACHEN
CERF-VOLANT

(30) Priority: 12.11.2014 GB 201420109
(43) Date of publication of application: 20.09.2017
(73) Proprietor: Kitemill A.S., 5704 Voss (NO)
(72) Inventor: HORNZEE-JONES, Chris, Brighton East Sussex BN1 4GH (GB)
(74) Representative: Plougmann Vingtoft a/s
(86) International application number: PCT/GB2015/053419
(87) International publication number: WO 2016/075461

(56) References cited:
- WO-A2-2011/121557
- CN-U- 203 670 096
- US-A- 4 601 443
- None

## Description

### Field of the Invention

The invention relates to a kite.

### Background to the Invention

People have harnessed wind energy for thousands of years. Lately, systems for converting wind energy to other forms of energy and particular electrical energy have become more popular. It is known to use wind turbines to extract the energy from the wind. It is also known to you kites to extract energy from the wind. Kites can fly at altitudes where wind speeds are more reliable than the wind speed at the height of the hub of a wind turbine. The hub height of a wind turbine may be at 80 or 100 m whereas kites can be flown at a height of 400 to 700 m or even higher. With kite-based power generating systems, the majority of the mass is kept near to ground or water level, which minimises bending moments and reduces the mass of the equipment considerably. Repair and service of the equipment is easier as all of this is at low-level. At sea, the equipment can be mounted on towable barges or buoys to allow retrieval to harbour for major repair or service.

A kite system for the extraction of energy from the wind typically includes a kite connected to base unit using a tether. In one type of system, the tether is wound on a drum. The rotation of the drum as the tether is pulled off is used to generate electricity, and at the end of the power cycle the drum is reversed to wind in the tether. In another type of system, a propeller or rotor is provided on the kite and as the wind passes the propeller or rotor the propeller or rotor is used to generate electrical power, which is transmitted down the tether to the base unit.

To efficiently generate power using a kite it is desired to have the kite flying through the air. A static kite on the end of a tether can only produce lift relative to the actual wind speed; however, when the kite is allowed to move lift is increased due to the apparent wind that is created by the motion of the kite relative to the true wind.

A tethered kite has a region of airspace in which it can generate a high tension in the tether. The centre of this region lies directly downwind of the base unit and at an angle of elevation from the base unit dependent on, for example, the design of the kite, the limitations of the power generation equipment and the wind speed. The region in which the appropriate high tension can be generated will hereinafter generally be referred to as 'the centre of the wind'. If the kite moves away from the centre of the wind, in either azimuth or elevation, the amount of tension it can generate in the tether may be less than optimum from the system for extracting energy from the wind. It is therefore desirable to keep the kite near the centre of the wind and also to control the kite to move at a high speed in the wind. It has been suggested that a suitable flight pattern is obtained when the kite is controlled to fly a figure of eight or continuous loop pattern. If the power is to be generated at ground level and not on the wing then during the power generating phase, when the kite is flying in a loop or figure of eight pattern, line is being continuously pulled off of the drum spinning the electrical generator or pump making power.

When the power stroke is finished, the line needs to be retracted. During the retract stage it is necessary to the force generated by the kite, to reduce the energy requirement and increase overall efficiency. This is generally achieved by flying the kite away from the centre of the wind to the edge of the power generating area, particularly towards the zenith or edge of the window. The closer the position is to 90° off of the wind direction, the lower the resistance to the kite being retracted. Some systems have been proposed that modify the kite in some way to reduce tension during the retraction, but these tend to be complicated arrangements which either significantly increase cost or significantly increase the likelihood of component failure, or both. Document CN203670096 shows a kite for extracting energy from the wind comprising a rigid frame.

### Brief Description of the Drawings

Figures 1 and 2 are isometric views of a kite according to a first embodiment of the invention;
Figure 3 is a diagram showing the movement of the tether of the Figures 1 and 2 embodiment from a fully powered to a de-powered position;
Figure 4 shows a second embodiment, with a single spar supported by stabilising lines and not attached directly to the kite;
Figure 5 shows a third embodiment, with a horizontal spar giving further pitch stability;
Figure 6 shows a fourth embodiment, where the main spar extends below a cross beam; and
Figure 7 shows detail of how the control lines can be directed via pulleys so as to stop the angle to the tether going flat and increasing the force on the actuators.

### Detailed Description of Various Embodiments

In brief, the invention relates to the improvement of power generated using kites by increasing their controllability. The embodiments provide rigid elements to a flexible aerodynamic structure in order to create attachment points for the tether system configured in relation to the pitch and roll neutral points in order to allow effective control of a generating kite with a balanced low energy system.

In the following, all references to left, right, forwards, backwards, roll, pitch etc. are relative to the kite in its direction of travel when flying.

Referring to the Figures, all the embodiments provide a kite for a system for extracting energy from the wind. The kite comprises a wing 1 for providing lift, a spar arrangement 2 connected beneath the wing 1, and bridle lines or semi-rigid tensile members 3 connected from the spars to the wing 1. A tether 4 is connected to a tether attachment point 5. The tether attachment point 5 is connected by a connection link 14, which is an extension of the tether 4, to a primary connection point 8 on the spar arrangement 2. The tether attachment point 5 is connected also to at least one secondary connection point where an actuator mechanism 6, 7 mounted further down the spar arrangement 2 can influence the kite in pitch or in pitch and roll combined.

The embodiments allow the movement of the tether attachment point of the kite within a controlled area limited by the triangulation between the control lines and their length, and this is facilitated by deflecting the tether attachment point 5. This is achieved without having to move any individual bridle line relative to the wing. It involves control forces which are relatively small compared to the tension in the tether 4 and the connection link 14. Other control methods and equipment can be used in combination with this, for example ailerons or drag flaps, and these other control methods and equipment may reduce the forces required by the actuator mechanism 6, 7 to provide movement of the tether attachment point of the kite within the controlled area.

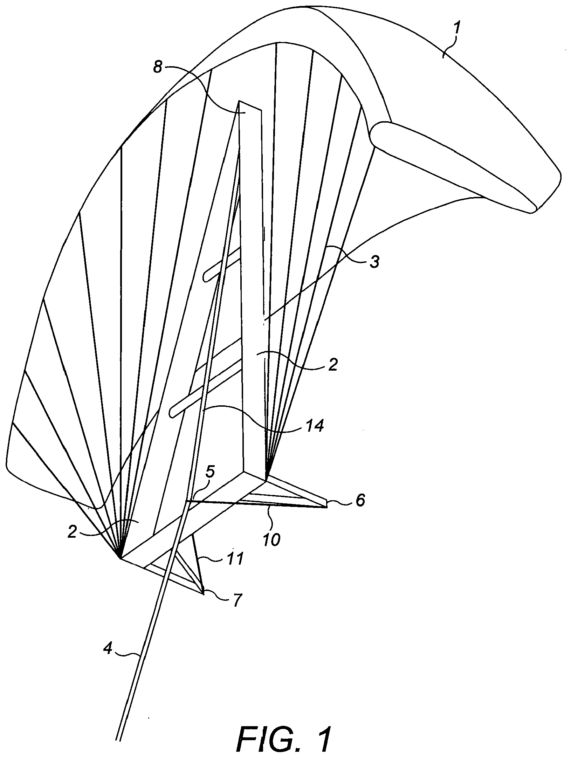

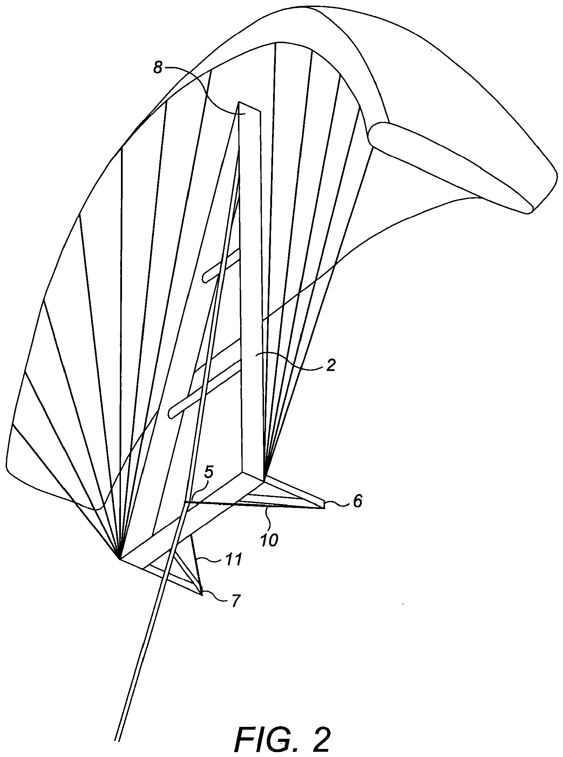

Referring firstly to Figures 1 and 2, a first embodiment of a kite for a system for extracting energy from the wind is shown. The kite comprises a wing 1 for providing lift, and a rigid spar arrangement 2 connected beneath the wing 1. Bridle lines or semi-rigid tensile members 3 are connected from the spar arrangement 2 to the wing 1. A tether 4 is connected to the spar arrangement 2 and extends to a ground station (not shown). In Figures 1 and 2, the spar arrangement 2 comprises a triangular or A-shaped structure of three connected spars. The longer spars are connected together at the primary connection point to the wing 1. The longer spars are generally vertical. The shorter spar connects the other ends of the longer spars at lower spar corners. The shorter spar is a cross spar and is generally horizontal.

The more vertical elements of the spar arrangement 2 are kept in a state of compression by action of the bridle lines being placed in tension through the action of the wind upon the wing 1.

There are two attachment points 5, 8 between the spar arrangement 2 and the tether 4, and one of the attachment points includes an actuator system or control mechanism 6, 7 that can adjust a distance between the spar arrangement 2 and the tether 4, to effect control over the kite. For instance, as is explained below, the distance between one lower corner of the spar arrangement and the tether attachment point 5, which is on the tether 4, is adjusted by using the first actuator 6 to shorten or lengthen a first cord that connects the corner of the spar arrangement to the tether attachment point 5. The distance between the other lower corner of the spar arrangement and the tether attachment point 5, is adjusted by using the second actuator 7 to shorten or lengthen a second cord that connects the corner of the spar arrangement to the tether attachment point 5. Thus, by control of the actuators 6, 7 the distance between the cross spar and the tether 4 can be adjusted to adjust the pitch of the wing 1, as is explained below. Also, the lateral position of the cross spar with respect to the tether can be adjusted to adjust the roll of the wing 1, as is explained below.

In particular, a first attachment point 8 is distal to the ground station and proximal to the wing 1, and a second attachment point is distal to the wing 1 and proximal to the ground station. Specifically, the first attachment point 8 is above the roll neutral point of the wing 1 and the second attachment point 5 is below the roll neutral point of the wing 1. The roll neutral point is a location about which the wing 1, if restrained, is neutrally stable about the roll axis when perturbed. The roll neutral point is an aerodynamic property of the lifting surfaces and is not defined by the structural connection point of the bridles or bridle groups. In practice, the roll neutral point changes according to the flying position of the wing 1. For instance, it changes when the wing 1 is pitched to give a different angle of attack into the wind, and changes when there is yaw movement of the wing 1. The roll neutral point exists as a point in a plane that faces forwards and backwards with respect to the flight. It can be pictured that the roll neutral point can lie anywhere on a line that extends perpendicularly to this plane.

The possible range of movement of the roll neutral point defines a roll neutral zone. Whilst the wing 1 is in a flying state producing lift that is capable of keeping the body in the air, the roll neutral point will always be within the roll neutral zone. The limits of the roll neutral zone are defined by the possible range of movement of the roll neutral point of the wing 1 in a flying state. In the following, the location of components relative to the roll neutral point will be understood to refer to their placement relative to the roll neutral zone, in which the roll neutral point must lie when the kite is in a flying state.

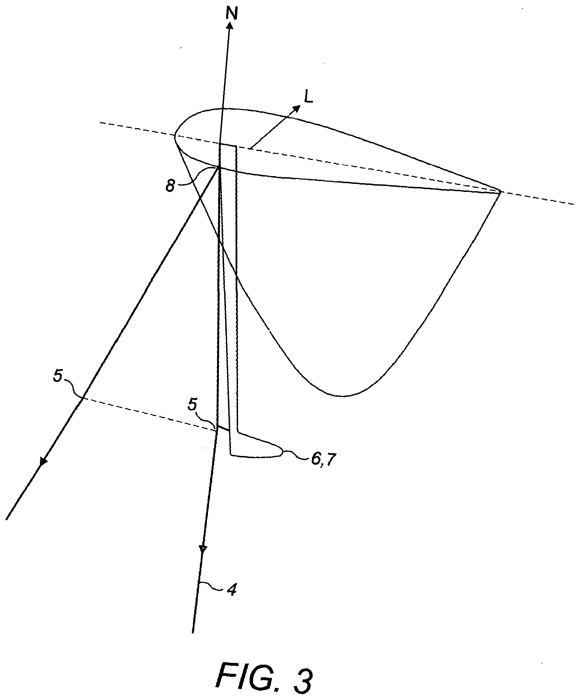

In the Figures 1 and 2 embodiment, the first attachment point 8 is in front of the normal centre of lift - labelled N - of the wing 1 (as can be seen in Figure 3). Put another way, the first attachment point 8 is in front of the pitch neutral position of the wing. This allows the control mechanism 6, 7 to provide pitch control. Pitch control is provided because there is an imbalance or moment for the control mechanism 6, 7 to pull against. As can be appreciated from Figure 3, when lift happens on the wing the whole arrangement attempts to pitch the front of the wing 1 (the nose) downwards. However, this is stopped by the lines of the actuator mechanism 6, 7 connecting to the tether 4 at the attachment point 5. In particular, the wing 1 tries to pitch downwards, attempting to pitch the spar arrangement 2 forwards also, but the control mechanism limits separation of the bottom part of the spar arrangement 2 from the second attachment point 5 to the tether 4. This causes the lines of the actuator mechanism 6, 7 to be placed in tension. The amount of tension depends on the chordwise (fore to aft) distance between the first attachment point 8 and the pitch neutral point, as well as the lift force provided by the wing. The tension results in there being a small kink in the tether and connecting line 14 arrangement at the location of the second attachment point 5.

It will be appreciated that the centre of lift of the wing 1 changes as the angle of attach of the wing 1 into the wind changes. As such, the pitch neutral position also changes. This results in the tension in the actuator mechanism 6, 7 also changing even without any change in wind speed.

Pitch control is useful because it allows the kite to be moved between a high lift position and a low lift position. The high lift position of the kite is best for generating power by allowing the kite to pay out from a generator-coupled drum at the ground station. The low lift position is best for allowing the kite to be retracted back towards the ground station prior to another power generating cycle. The lift generated by the kite when in the low lift position is indicated at L in Figure 3. It will be seen that the lift force is lower, and also is centred further back in the wing. By controlling the kite to provide low lift when being retracted, the energy required to retract the kite can be reduced.

The connecting line 14/tether 4 is attached to and joins the spar arrangement 2 at the first attachment point 8. At the second attachment point 5, the connecting line 14/tether 4 does not join the spar arrangement 2 but is coupled to it at a distance that is controllable by actuators of the actuator mechanism 6, 7. By suitable control of the actuators, control of the kite in pitch or roll, or pitch and roll combined, is achieved.

A first actuator mechanism 6 includes an actuator coupled via a first tensile link 10 at one end to an arm that is rigidly fixed to a first spar corner and at the other end to the tether 4 at the second attachment point 5. A second actuator mechanism 7 includes an actuator coupled via a second tensile link 10 at one end to another arm that is rigidly fixed to the second spar corner and at the other end to the tether 4 at the second attachment point 5. The length of the first actuator mechanism 6 (or the first tensile link 10 that forms part of it), and thus the distance between the spar corner (and the overall spar arrangement 2) and the second attachment point is adjusted by suitable control of the actuator 6. The same applies to the second actuator mechanism 7 and the second tensile link 10 that forms part of it. The actuators of the actuator mechanism 6, 7 here are in the form of servos or servomotors but may take some other form, such as winches or rams. In general, an actuator controllably adjusts the length of the actuator mechanism 6, 7.

By adjusting the actuators of the actuator mechanisms 6, 7 by the same amount on each actuator mechanism 6, 7, the position of the tether attachment point 5 is directly adjusted. This changes the trimmed pitch angle of the wing 1 in particular by changing the pitch angle of the wing 1 relative to the tether.

By adjusting the actuators of the actuator mechanisms 6, 7 differentially (i.e. making one longer than the other), then the roll of the wing 1 is adjusted in relation to the tether 4.

Both of the above methods can be used to give combined pitch and roll control to the wing in relation to the tether. Rolling of the kite results in steering of the kite, i.e. changing the yaw.

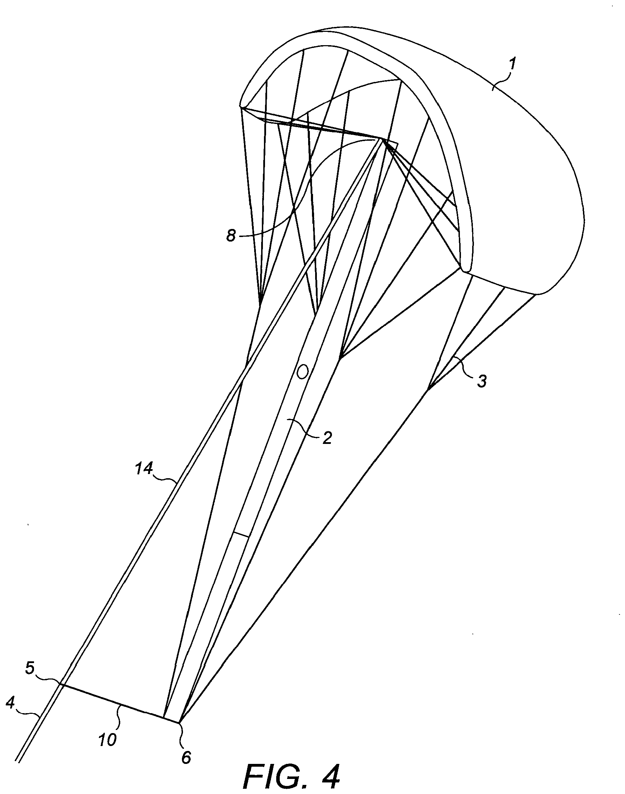

The top of the spar or spars 2 is mounted to the wing 1 in Figure 1. Alternatively, its position relative to the wing is stabilised by a series of rigging lines or members held in tension by the rigidity and lift of the wing 1, as shown in Figure 4.

The Figure 4 embodiment is similar to the Figure 1 embodiment, and like reference numerals refer to like elements. A key difference is that there is only one tensile link 10 between the lower end of the spar arrangement 2 and the connection point 5 to the tether 4. One actuator 6 is configured controllably to alter the length of the first tensile link 10. Thus, the kite of the Figure 4 embodiment is controllable as regards pitch by altering the length of the tensile link 10 but this cannot be used to effect roll control. Roll can be effected using aerodynamic changes to the wing 1 either directly with ailerons for roll, distortion of the wing or indirectly via lines attached between the spar 2 and the wing 1 itself. However, pitch control can be achieved though control of the actuator arrangement 6.The spar arrangement 2 includes a single spar 2, arranged vertically. The spar arrangement is elongate but because there are not plural actuators that need to be spaced apart, no cross spar is needed and so the spar arrangement does not need to be triangular or A shaped.

In Figure 4, the top of the spar 2 is stabilised by a series of rigging lines or members held in tension by the rigidity and lift of the wing 1. This illustrates that the first attachment point 8 does not need to be directly on the wing 1. This technique for separating the attachment point 8 from the wing 1 may be applied to the other embodiments also. In Figure 4, the attachment point 8 may instead be provided directly on the wing 1.

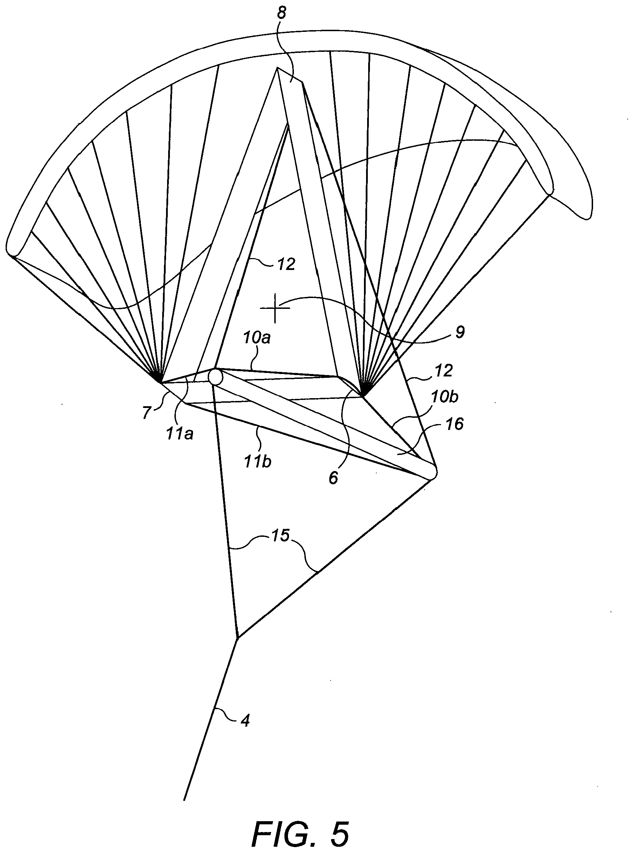

Figure 5 shows a third embodiment, with a horizontal spar or spreader 16 giving further pitch stability. Here, the horizontal spar 16 extends fore and aft. The ends of the horizontal spar 16 are attached to the tether 4 by tether extensions 15. The ends of the horizontal spar 16 also are attached to the connection point 8 by further tether extensions 12. As such, the tether 4 is connected to the connection point 8. It may be considered that the tether 4 is split with the two branches of the split being held apart by the horizontal spar 16. This may be termed a split attaching member. The force provided by the wing 1 is provided to the tether 4 through the tether extensions 12, 15. Part of this force is applied as a compressive force to the horizontal spar 16.

The spar arrangement 2 is substantially as shown in Figures 1 and 2 except that it is connected to the horizontal spar 16. The spar arrangement 2 is connected to the horizontal spar 16 by fore and aft tensile links 10a, 10b, 11a, 11b. Each actuator 6, 7 is connected by one of the fore and aft tensile links 10a, 10b, 11a, 11b to each end of the horizontal spar.

With the Figure 5 embodiment, the pitch neutral point does not need to be forward of the connection point 8. Instead, the pitch neutral point in normal flight could be in line with the connection point 8. This means that smaller forces are needed to be applied by the actuators 6, 7 in order to effect pitch control. This allows the servomotors or other actuators to control pitch if the system is neutral or unstable about the connection point 8. The same applies to roll control.

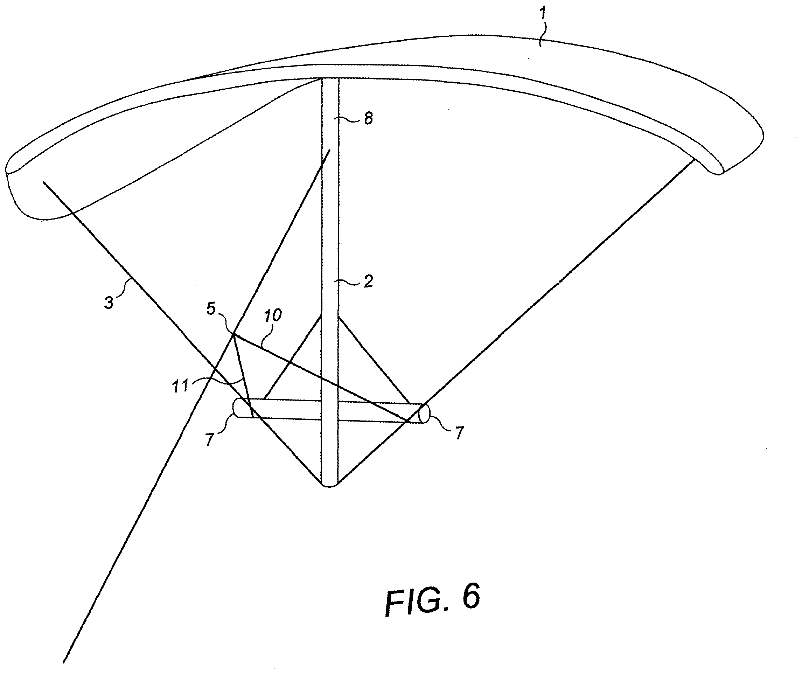

With the Figure 6 embodiment, the main spar arrangement 2 extends below a cross beam. This allows connection of the bridle lines 3 to the spar arrangement as a point below the positions of the actuators 6, 7 and the tensile links 10, 11.

In Figure 6, the wing 1 is rigid and so fewer bridle lines 3 are needed. Such a rigid wing 1 may be applied to the other embodiments also.

Maintaining its position in front of the centre of effort of the wing 1 (the centre of effort is shown as the position of the lift N in Figure 3 but there is a centre of effort in the wings of all of the Figures), the bottom of the spar arrangement 2 of the Figure 6 embodiment is below the roll neutral zone of the wing 1. The relative position of the tether 4, in particular the attachment point 5, in relation to the spar or spars 2 is controlled by the actuators of the actuator mechanisms 6, 7.

In the embodiments of Figures 1-3, 5 and 6, the connection point 8 may be provided by attachment of the spar arrangement 2 to a central rib, that can be rigid or inflated, surface attachment on the wing, attached to the top end of the spar. The position of the connection point 8 is governed by the pitch neutral point of the wing in the chordwise direction, except as regards the Figure 4 embodiment. The larger the pitch moment that is created by the chordwise distance between the connection point 8 and the pitch neutral point, the more stable the arrangement is but also the greater is the force requirement of the actuators 6, 7.

The system is designed so that the wing has a lift (effort) vector that, when the kite is in a flying state, creates tension in the tensile links 10, 11 between the second attachment point 5 and the actuators of the actuator mechanisms 6, 7 giving the arrangement natural stability in pitch and roll in most operational conditions. Extreme conditions of gusts or flight manoeuvres may cause transient slackness to develop in one of the tensile links 10, 11.

With two tensile links 10, 11 and two actuators 6, 7, the kite can be rolled. As the bottom of the spar arrangement 2 is below the roll neutral point of the system, the kite is naturally roll stable. By shortening the length of the tensile link 11 from the actuator 7 and lengthening the tensile link 11 from the actuator 7 to the tether attachment point 5, the spar arrangement 2 is moved to the left. This introduces a roll to the left. Upon reversing the control inputs, the spar arrangement 2 moves to the right, introducing a roll to the right.

The spar or spars of the spar arrangement 2 may be a single item or any arrangement of rigid members that give a compressive element between the bridle attachment point or points and the top of the compressive element. This applies whether it is directly attached to the wing or indirectly supported (as in Figure 4).

The spars, cross braces and spreaders can be manufactured out of aluminium, glass fibre, carbon fibre or any material that is able to create a lightweight compression strut. The shape of these members should be designed to give high compression strength with low weight and aerodynamic drag.

In the example given in Figures 1 and 2, spars are aerodynamically formed with cross braces and rigging wires, this arrangement gives a very light stiff structure. By giving the spars aerodynamic form, they are also given fore and aft depth which assists in stiffness in this direction. Other examples of shapes that could be used for spars are double tapered spars or aerodynamic spars with spreader bars and aerodynamic rigging. In Figure 6, an attached spreader bar is shown with diamond rigging wires.

In arrangements with multiple spars (see Figures 1 and 2 for instance) or a single vertical spar with lateral extensions (see Figure 6 for instance), the actuators 6, 7 are able to either fully or partially control of roll as well as pitch.

Due to the addition of a compression member or members the entire bridle arrangement is kept stable and in tension. There are no pulleys required within the bridle system so the bridle lines can have profiles with low aerodynamic drag.

The systems described here are far more stable and far less prone to fatigue than standard kite systems. This system does not exclude pulleys and moving bridle lines, which may be used to distort wing surfaces or control surfaces on the wing.

The actuators may be mounted almost anywhere within the system as there is only a requirement to attach the lines to attachment point 5.

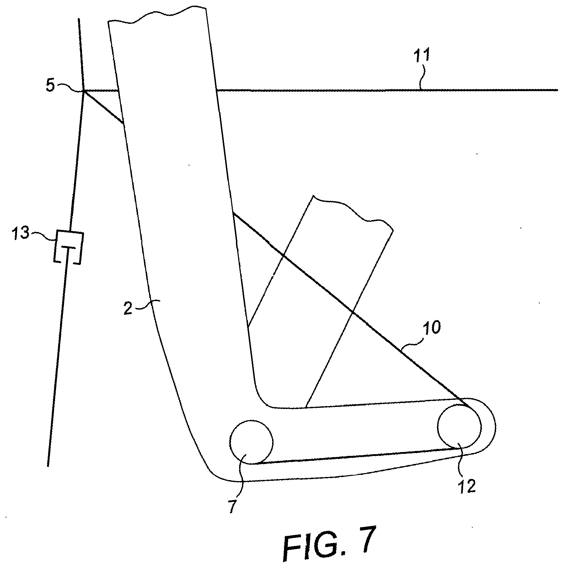

Small line winches can be fitted as actuators 6, 7, or alternatively pulleys 12 may be used with lines leading to winches or linear actuators or hydraulic rams within the primary spars 2. This is shown in Figure 7.

The spar arrangement 2 can be used for the fitting of lighting. Lights can also be fitted so that optical sensing can be used for the final docking manoeuvres. Cavities within the spars can be used for the mounting of avionics and communication equipment, for example sensing platforms incorporating GPS, inertial measurement equipment, radar, radio triangulation transponders, communication equipment, batteries, super capacitors and all other ancillary equipment.

Local power for running the avionics and controls can be generated by fixing a small turbine low down or at the bottom of the spar arrangement 2. This gives the local power generation arrangement stability that is difficult to gain without the rigid spar arrangement 2. The turbine adds drag, which can assist in pitch stability in the wing 1.

The bridle lines 3 can be arranged in any suitable way. For instance, they may be continuous from the wing down to the bottom of the spar arrangement 2 (as in Figure 5), grouped (as in Figure 4), or, if the wing is of high rigidity, minimal bridling can be fitted (as per Figure 6).

In operation the kites described above are capable of rapid changes in angle of attack while maintaining flight stability, allowing the kite to fly more directly back towards the base station when not generating power, thereby reducing the time and therefore the losses in the system.

The fitting of a swivel 13 in the tether 4 avoids undue twisting of the tether should a circular flight pattern be preferred over a figure of eight flight pattern.

The spar arrangement 2 may store energy storage devices, avionics, sensors, communications equipment, and/or antennae (not shown).

The spar arrangement may house lighting. The lighting can be useful to assist positioning the kite during docking and launching sequences.

Various alternatives and modifications will be apparent to the skilled person. The scope of protection is limited by the attached claims and not by the above description.

## Claims

1. A kite comprising:
a wing (1);
a tether (4) coupled directly or indirectly to the wing;
tensile couplings (3) from a rigid spar arrangement (2) to multiple locations on the wing; and
an actuator linkage arrangement (6, 7, 10,11) having a length dimension that can be controllably adjusted, **characterised by** the rigid spar arrangement (2) having first and second attachments (8, 5) to the tether,
wherein:
at the first attachment (8) the spar arrangement is fixed to the tether, and
at the second attachment (5) the spar arrangement is attached to the tether and separate from the tether by a distance that is adjusted by control of the actuator arrangement (6, 7, 10, 11).

2. A kite according to claim 1, wherein:
the wing (1) has a roll neutral point or zone when the kite is in flight;
at the first attachment (8) the spar arrangement is fixed to the tether at a location that is above a roll neutral point or zone of the wing; and
at the second attachment (5) the spar arrangement is attached to the tether by the actuator arrangement (6, 7, 10, 11) at a location that is below the roll neutral point or zone of the wing.

3. A kite according to claim 2, wherein the actuator linkage arrangement is controllable to adjust a distance between the second attachment and the spar arrangement, to effect pitch control of the kite.

4. A kite according to claim 2 or claim 3, wherein the spar arrangement has a cross spar that extends in a width direction of the wing, wherein the actuator linkage arrangement includes first and second actuator linkages that are connected to the cross spar at different positions in the width direction of the wing, and wherein the first and second actuator linkages are controllable to adjust an angle between the spar arrangement and the tether in the fore and aft direction of the wing, to effect roll control of the kite.

5. A kite according to claim 4, wherein the actuators are mounted onto the cross spar or other spars where they meet the cross spar.

6. A kite according to claim 5, wherein the actuators are mounted on extensions to the cross spar or other spars where they meet the cross spar.

7. A kite according to any preceding claim, comprising a chordwise spar arranged to split the tether fore and aft.

8. A kite according to any preceding claim, wherein the first attachment comprises a direct attachment between the spar arrangement and the wing.

9. A kite according to claim 8, wherein the spar arrangement is connected to a central rib of the wing at the first attachment.

10. A kite according to any preceding claim, where the spar arrangement houses energy storage devices, avionics, sensors, communications equipment and/or antennas.

11. A kite according to any preceding claim, where the spar arrangement houses lighting.

12. A kite according to any preceding claim, where lighting is used to assist positioning the kite during docking and launching sequences.

## Patentansprüche

1. Winddrachen, umfassend:
einen Flügel (1);
ein Halteseil (4), das direkt oder indirekt an den Flügel gekoppelt ist;
Zugkopplungen (3) von einer starren Holmanordnung (2) zu mehreren Stellen an dem Flügel; und
eine Aktuatorverbindungsanordnung (6, 7, 10 ,11), die eine Längsabmessung aufweist, die steuerbar angepasst werden kann, **dadurch gekennzeichnet, dass**
die starre Holmanordnung (2) eine erste und eine zweite Anbringung (8, 5) an dem Halteseil aufweist,
wobei:
an der ersten Anbringung (8) die Holmanordnung an dem Halteseil befestigt ist, und
an der zweiten Anbringung (5) die Holmanordnung an dem Halteseil und separat von dem Halteseil um einen Abstand angebracht ist, der durch Steuerung der Aktuatoranordnung (6, 7, 10, 11) angepasst wird.

2. Winddrachen nach Anspruch 1, wobei:
der Flügel (1) einen neutralen Rollpunkt oder -bereich aufweist, wenn der Winddrachen im Flug ist;
an der ersten Anbringung (8) die Holmanordnung an dem Halteseil an einer Stelle befestigt ist, die über einem neutralen Rollpunkt oder -bereich des Flügels ist; und
an der zweiten Anbringung (5) die Holmanordnung an dem Halteseil durch die Aktuatoranordnung (6, 7, 10, 11) an einer Stelle angebracht ist, die unter dem neutralen Rollpunkt oder -bereich des Flügels ist.

3. Winddrachen nach Anspruch 2, wobei die Aktuatorverbindungsanordnung steuerbar ist, um einen Abstand zwischen der zweiten Anbringung und der Holmanordnung anzupassen, um Neigungssteuerung des Winddrachens zu bewirken.

4. Winddrachen nach Anspruch 2 oder Anspruch 3, wobei die Holmanordnung einen Querholm aufweist, der sich in einer Breitenrichtung des Flügels erstreckt, wobei die Aktuatorverbindungsanordnung eine erste und eine zweite Aktuatorverbindung beinhaltet, die mit dem Querholm an unterschiedlichen Positionen in der Breitenrichtung des Flügels verbunden sind, und wobei die erste und die zweite Aktuatorverbindung steuerbar sind, um einen Winkel zwischen der Holmanordnung und dem Halteseil in der Vorwärts- und Rückwärtsrichtung des Flügels anzupassen, um Rollsteuerung des Winddrachens zu bewirken.

5. Winddrachen nach Anspruch 4, wobei die Aktuatoren an dem Querholm oder an anderen Holmen, wo sie auf den Querholm treffen, montiert sind.

6. Winddrachen nach Anspruch 5, wobei die Aktuatoren an Erweiterungen an dem Querholm oder an anderen Holmen, wo sie auf den Querholm treffen, montiert sind.

7. Winddrachen nach einem vorhergehenden Anspruch, umfassend einen Holm in Sehnenrichtung, der angeordnet ist, um das Halteseil vorne und hinten zu teilen.

8. Winddrachen nach einem vorhergehenden Anspruch, wobei die erste Anbringung eine direkte Anbringung zwischen der Holmanordnung und dem Flügel umfasst.

9. Winddrachen nach Anspruch 8, wobei die Holmanordnung mit einer zentralen Rippe des Flügels an der ersten Anbringung verbunden ist.

10. Winddrachen nach einem vorhergehenden Anspruch, wobei die Holmanordnung Energiespeichervorrichtungen, Bordelektronik, Sensoren, Kommunikationsausrüstung und/oder Antennen beherbergt.

11. Winddrachen nach einem vorhergehenden Anspruch, wobei die Holmanordnung Beleuchtung beherbergt.

12. Winddrachen nach einem vorhergehenden Anspruch, wobei Beleuchtung verwendet wird, um die Positionierung des Winddrachens während Andock- und Startsequenzen zu unterstützen.

## Revendications

1. Cerf-volant comprenant :
une aile (1) ;
une attache (4) couplée directement ou indirectement à l'aile ;
des couplages de traction (3) allant d'un agencement de longeron rigide (2) à des multiples emplacements sur l'aile ; et
un agencement de liaison d'actionneur (6, 7, 10, 11) possédant une dimension de longueur qui peut être réglée de manière commandée, **caractérisé par**
l'agencement de longeron rigide (2) comportant des première et seconde fixations (8, 5) à l'attache,
au niveau de la première fixation (8), ledit agencement de longeron étant fixé à l'attache, et
au niveau de la seconde fixation (5), ledit agencement de longeron étant attaché à l'attache et séparé de l'attache d'une distance qui est réglée par la commande de l'agencement d'actionneur (6, 7, 10, 11).

2. Cerf-volant selon la revendication 1,
ladite aile (1) possédant un point ou une zone neutre en roulis lorsque l'aile est en vol ;
au niveau de la première fixation (8), ledit agencement de longeron étant fixé à l'attache au niveau d'un emplacement qui est au-dessus du point ou de la zone neutre en roulis de l'aile ; et
au niveau de la seconde fixation (5), ledit agencement de longeron étant attaché à l'attache par l'agencement d'actionneur (6, 7, 10, 11) au niveau d'un emplacement qui se trouve en dessous du point ou de la zone neutre en roulis de l'aile.

3. Cerf-volant selon la revendication 2, ledit agencement de liaison d'actionneur pouvant être commandé pour régler une distance entre la seconde fixation et l'agencement de longeron, afin d'effectuer la commande de tangage du cerf-volant.

4. Cerf-volant selon la revendication 2 ou la revendication 3, ledit agencement de longeron comportant un longeron transversal qui s'étend selon la direction de la largeur de l'aile, ledit agencement de liaison d'actionneur comprenant des première et seconde liaisons d'actionneur qui sont raccordées au longeron transversal au niveau de différentes positions dans la direction de la largeur de l'aile, et lesdites première et seconde liaisons d'actionneur pouvant être commandées pour régler un angle entre l'agencement de longeron et l'attache dans la direction avant et arrière de l'aile, pour effectuer la commande de roulis du cerf-volant.

5. Cerf-volant selon la revendication 4, lesdits actionneurs étant montés sur le longeron transversal ou d'autres longerons là où ils rencontrent le longeron transversal.

6. Cerf-volant selon la revendication 5, lesdits actionneurs étant montés sur des extensions du longeron transversal ou d'autres longerons là où ils rencontrent le longeron transversal.

7. Cerf-volant selon une quelconque revendication précédente, comprenant un longeron selon la direction de la corde agencé pour séparer l'attache avant et arrière.

8. Cerf-volant selon une quelconque revendication précédente, ladite première fixation comprenant une fixation directe entre l'agencement de longeron et l'aile.

9. Cerf-volant selon la revendication 8, ledit agencement de longeron étant raccordé à une nervure centrale de l'aile au niveau de la première fixation.

10. Cerf-volant selon une quelconque revendication précédente, ledit agencement de longeron abritant des dispositifs de stockage d'énergie, l'avionique, des capteurs, des équipements de communication et/ou des antennes.

11. Cerf-volant selon une quelconque revendication précédente, ledit agencement de longeron abritant l'éclairage.

12. Cerf-volant selon une quelconque revendication précédente, ledit éclairage étant utilisé pour aider à positionner le cerf-volant durant les séquences d'amarrage et de lancement.
